# EUROPEAN PATENT APPLICATION

(11) **EP 2 328 146 A1**
(43) Date of publication of application: **01.06.2011**
(21) Application number: 09014703.4
(22) Date of filing: 25.11.2009
(51) Int. Cl.: G11B 7/085

(54) **Start-up improvement for disc drives**

(71) Applicant: Philips & Lite-On Digital Solutions Corporation, Neihu 114, Taipei (TW)
(72) Inventor: Rieck, Marcel, Neihu District Taipei (TW)
(74) Representative: Müller-Boré & Partner Patentanwälte

(57) **Abstract**

In an optical pick-up unit, a light source (9) in combination with a detector (10) is used to illuminate the storage layer (5) of a disc (1) to read out information encoded on the disc (1). As the information is stored on a track (2), two electromechanical actuators (6,15) are provided to control both the focus position of a focusing element (4) and a radial position of the optical read out spot on the disc. It would be advantageous to provide a method for an improved start-up performance of an optical pick-up unit under the influence of external vibrations. In order to improve the focus/track capture performance, it is suggested that prior to the closure of the feedback loops, actuate the actuator (6,15) at a velocity which is much slower than a maximum velocity associated with a resonance frequency of the electromechanical actuator in use (6,15).

## Description

### FIELD OF THE INVENTION

The invention relates to the field of optical pick-up units (OPU) for optical storage media, e.g. compact discs (CD) or digital video discs (DVD). In particular the invention relates to a method for operating an optical pick-up unit.

### BACKGROUND OF THE INVENTION

US Patent application US 2004/0208092 A1 discloses a focus position adjustment method for adjusting the focus position of optical beam by which an optical storage device reads an optical storage medium. The optical storage medium comprises a header and a recording area. The optical storage device generates a focus error signal as reading the medium and utilizes the focus error signal to control the focus of the optical pick-up head. After the optical storage device finishes tracking closed loop, the method is performed according to the deviation value between the levels of focus error signals of the header and the recording area to adjust the focus position to make the deviation value fall in a predetermined range. The system comprises a deviation value detection module for determining the deviation value and a focus control module for adjusting the focus position.

In an optical pick-up unit according to the reference, a light source in combination with a detector are used in order to illuminate the disc surface to be read out and to detect the light reflected from the surface of the disc providing the information encoded on the disc. As the information is stored on a track, e.g. a spirally shaped track or tracks arranged in concentric rings, a two-stage electromechanical system is provided in order to control both the focus position of the focusing element (lens) with respect to the data or storage layer on the disc and the radial position of the optical pick-up unit along the disc. This system consists of a carriage or sledge, on which the optical pick-up unit including a radial electromechanical actuator for the focusing element is mounted.

Furthermore, it has a second electromechanical actuator providing a motion in a direction perpendicular to the surface of the disc which focuses the reading spot on the storage layer. During normal track following, i.e. the reading of data stored on the track of the disc, the electromechanical actuator operating in a radial direction is responsible for the fast positioning of the focused reading spot in a radial direction with respect to the target track and keeps it in the middle of the track, as the disc rotates, e.g. the spiral track slowly moves outwards. In order to keep the radial lens actuator in the middle of the working range of the optical pick-up unit, the carriage or sledge slowly moves outwards, following the path of the track.

In the optical pick-up unit according to the reference, a control of the actuators is provided by closed feedback loops driving the actuators in response to error signals provided for the focus and radial positions of the read out spot, respectively. However, start-up of the optical pick-up unit is performed with open loops and the loops are closed as soon as the storage layer is captured in the focus direction and a track is captured in the radial direction, respectively.

For the optical pick-up unit according to the reference, the focus and radial controllers are only operated in closed loop mode after focus and track capture, respectively, have occurred and the feedback loops could be closed. During start-up of the optical pick-up unit the feedback loops are open.

Due to external vibrations acting on the drive unit in which the optical pick-up unit is employed, the actuators start swinging mostly at their resonance frequencies. The amplitude with which the actuators swing depends on the level of external vibrations. During the start-up procedure, the not actuated radial actuator thus oscillates around its center of motion while the ramped focus actuator wings around its current ramping position. Due to the oscillatory motion of the actuators their velocity is typically the highest at the center of oscillatory motion. At the two positions where each actuator changes direction the velocity of the actuator with respect to the track or with respect to the optical storage layer is almost zero.

The velocities of the electromechanical actuators are translated via the focusing element, e.g. a lens, to the velocities of the reading spot moving with respect to the track (for the radial actuator) or with respect to the optical storage layer (for the focus actuator). However, track capturing as well as focus capturing can only occur at slow relative velocities of the focal point with respect to the track and the optical storage layer, respectively. However, those points of low relative velocity occur far outside the linear operation range of the optical pick-up unit. In this range outside the operational range the generated error signals become very small, unreliable and cannot be taken to drive the controller.

### SUMMARY OF THE INVENTION

It would be advantageous to provide a method for starting up an optical pick-up unit for an optical storage medium. The method enables an improved start-up performance under vibration by enhanced focus and track captures, i.e. closing of the feedback loops, which are controlling the focus and radial actuators.

To better address one or more of these concerns, in a first aspect of the invention, a method for starting up an optical pick-up unit for an optical storage medium having a storage layer for storing data is provided. The method comprises the steps: using a focusing element mounted on at least one actuator to position a focal point of a readout beam on the storage layer to read the data on the storage layer, wherein the data is arranged on a track having a lateral extension around a center; determining an error signal representing a distance between the focal point and the storage layer or between the focal point and the center of the track; actuating the actuator prior to closing a feedback loop, wherein the actuator is moved in alternate directions at a frequency which is smaller than a resonance frequency of the electromechanical actuator; and closing the feedback loop to actuate the actuator in a controlled manner, wherein after closing the feedback loop, the error signal is used to determine the actuation of the actuator, such that the focal point follows the data stored on the track.

In an embodiment, the lens of the optical pick-up unit is positioned using two electromechanical actuators, one in focus direction (perpendicular to the disc) and the other in radial direction (along the radius of the disc). The former focuses the reading spot in the plane of the storage layer of the disc whereas the later provides the fast short stroke tracking of the track in the storage layer. The radial carriage/sledge on which the optical pick-up unit is mounted provides for the slow long stroke tracking of the track.

In an embodiment of the invention, the actuator is moved back and forth at a frequency which is smaller 100 to 1000 times, preferably 500 to 1000 times than the resonance frequency of the electromechanical actuator. This leads to a slow motion of the turning points of the oscillatory motion of the actuator over the operational range of the optical pick-up unit, increasing the probability for focus or track capture. The smaller the frequency of the actuation of the electromechanical actuator is, the more likely focus or track capture occurs.

According to a further aspect of the present invention, a computer program enabling a processor to carry out the method as laid out before is provided.

A method according to the different embodiments of the present invention could advantageously be employed in a playback or recording module for an optical data medium, preferably for a CD or DVD or any other disc-shaped optical storage medium.

A playback module according to embodiments of the present invention could be employed in an audio, video or data system, advantageously in a portable audio, video or data system.

These and other aspects of the invention will be apparent from and elucidated with reference to the embodiments described hereinafter.

### BRIEF DESCRIPTION OF EMBODIMENTS

Figure 1 diagrammatically shows an optical pick-up unit according to an embodiment of the present invention.
Figure 2 diagrammatically shows the radial error signal for deviations around a track position.
Figure 3 shows a flowchart of a method for focus capturing according to the present invention.
Figure 4 shows a flowchart of a method for track capturing according to the present invention.

### DETAILED DESCRIPTION OF EMBODIMENTS

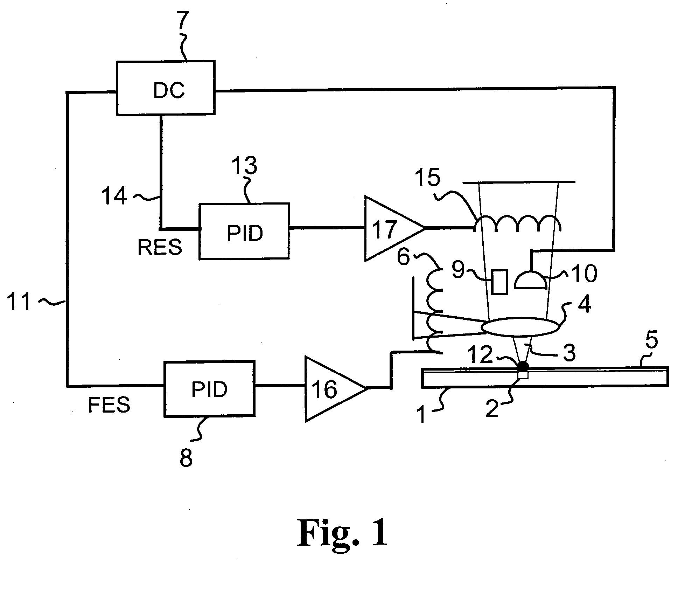

Figure 1 shows a diagrammatic view of an optical pick-up unit operated according to the method of the present invention. On a disc 1, the data is stored on a reflective storage layer 5 in the form of small reflectivity variations. The information stored in the storage layer 5 is organized in a long spirally shaped track 2 from the center to the outer diameter of the disc 1. In order to read the data stored on such a disc 1, a laser beam 3 is focused onto the storage layer 5 of the disc 1 by means of a lens 4, which is actuated in two perpendicular directions.

The focusing lens 4 is actuated in a first direction perpendicular to the storage layer 5 of the disc 1 by a so-called focus actuator 6. The focus actuator 6 is controlled by a focus controller. The focus controller is formed by a detection circuit 7 in combination with a first PlD type controller 8 and an amplifier 16. A laser 9 provides an optical readout beam 3 being focused by lens 4 onto the storage layer 5 of the disc 1. The light reflected from the storage layer 5 of the disc 1 is received by a detector 10 providing a signal indicating the overall amount of light reflected from the storage layer 5 of the disc 1.

The signal provided by the detector 10 is further computed by the detector circuit 7 in order to provide a focus error signal 11 indicating distance between the focus position and the storage layer 5 of the disc 1 in a direction perpendicular to the storage layer 5 of the disc 1.

The focus actuator 6, the detector 10, the detection circuit 7, the PID element 8 as well as the amplifier 16 form a closed loop, together. The focus controller uses the focus error signal 11 to focus the reading spot, i.e. to keep the focal point 12 (reading spot) of the lens 4 in the plane of the storage layer 5.

As the focus error signal 11 is only valid over a small range (around the point where the focal point 12 and the storage layer 5 meet), and as the position range of the storage layer 5, i.e. the vertical deviation of the disc 1, is much larger (in the order of ±0.5 mm with respect to the nominal position of the focal point 12 of lens 4), one must first search for the position of the storage layer 5 by moving the focus actuator 6. This is performed by the so-called ramping process. The focus actuator 6 moves the lens 4 up and down and at the moment the storage layer 5 crosses through the focal point 12 of the lens 4, the ramping process stops, keeping the actuator 6 in the current position and the focus controller is switched on. The focus controller keeps the distance between the storage layer 5 and the focal point 12 small enough such that the focus error signal 11 stays within a range in which it is valid. After the initial transition effects, the focus controller keeps the distance between the focal point 12 and the storage layer 5 within the range necessary for reliable readout operation. The ramping period in the referenced system is chosen to be as fast as possible in order to keep the start-up time of the module as short as possible.

As the disc 1 turns and the focus controller keeps the lens focused on the storage layer 5, another control system actuates the radial position of the lens 4 and keeps the focal point 12 on the spirally shaped track 2 containing the data. The corresponding feedback controller driving the radial actuator 15 is called the radial controller. It comprises the detection circuit 7, a second PID type controller 13 and an amplifier 17. The detection circuit 7 also computes the radial error signal 14 from the light intensity reflected from the storage layer 5 of the disc 1 and received by detector 10.

During readout operation, the radial actuator 15, the detector 10, the detection circuit 7, the PID element 13 as well as the amplifier 17 form a closed loop, together. Depending on the value of the radial error signal 14, the PID element 13 drives the radial actuator 15 via a first value such that the focal point 12 follows the spiral shape of the track 2 on the storage layer 5 of the disc 1. In addition, a sledge controller controls a sledge/carriage, it moves the sledge/carriage in such a way that the DC value of the radial controller output becomes zero, in that case the radial actuator positions the lens radially in the middle of the operating range of the optical pick-up unit.

Moreover, the actuator 15 can be actuated by providing a constant offset. In case the constant offset is applied to the radial actuator 15, the center of the oscillatory motion of the radial actuator 15 due to external vibrations is moved into the operational range of the pick-up unit.

With the reading spot in focus, the radial error signal 14, which is the other signal derived from the light reflected from the disc 1, indicates the distance between the center of a track 2 on the disc 1 and the center of the reading spot. When the reading spot is exactly on the center of a track 2, the radial error signal equals zero. As the reading spot moves away from the track center, the radial error signal 14 either increases or decreases depending on the direction in which the reading spot moves. Using a radial controller, the reading spot is kept in the center of a track 2. As this is the only place where the radial error signal 14 is zero and the control loop is stable. So when the radial controller is switched on, the reading spot will automatically home in on a track center that just happens to be close to the reading spot. After this, the reading spot is in focus and on track 2 and the data, in the form of pits in the data-layer that modulate the reflected light, can be read.

Once both control loops i.e. for the focus actuator 6 as well as for radial actuator 15 are closed, readout operation begins with the focal point 12 following the track 2 of the storage layer 5. The information stored on the track 2 of the disc 1 is derived from the changes in intensity of the light reflected back from the storage layer 5. These intensity changes are detected by the detection circuit 7 which in case of the embodiment according to figure 1 is formed by a photo detector integrated circuit (PDIC). In the embodiment presented, the PDIC is the same element provided for computing of the focus error signal, the radial error signal as well as the signal representing the information retrieved from the disc 1.

The focus error signal 11 indicates the distance between the focal point 12 of the lens 4 and the plane of the storage layer 5. This signal is only valid when the focal point 12 of the lens 4 is within a small range around the storage layer 5 where the signal is linear (in order of ± 5µm for the CD, for example). The radial error signal 14 indicates the distance between the center of the track 2 and the position of the focal point 12 in a direction parallel to the storage layer 5.

The search for the approximately correct position of the focal point 12 in the focus direction as well as in the radial direction is performed open loop. In case of an external vibration, the positions of the actuators are strongly influenced by the external forces on the optical pick-up unit. The external vibration in combination with a low damping factor of the actuators' suspension will cause the actuators to swing, predominantly at their resonance frequencies, i.e. in the embodiment shown particularly close to 50 Hertz. External vibrations lead to a large amplitude of the oscillatory motion performed by the actuators. Every time the focal point 12 of the lens 4 crosses the storage layer 5, the focus error signal 11 will be valid and the focus controller could be switched on. However, due to the high relative velocity between the focal point 12 and the storage layer 5, the focus controller will not be able to capture the focal point 12 on the storage layer 5 in order to keep the focus error signal 11 within the range in which it is valid. The control loop can only be successfully switched on or closed at an instant in which the relative velocity of the focal point 12 with respect to the storage layer 5 is slow enough such that the PID element 8 comprising a specific time constant can react fast enough in order to achieve a capture of the focus under the influence of external vibrations. Such relatively slow velocities occur only at the turning points of the oscillatory motion of the focus actuator. However, the turning points are typically far outside the range providing a valid error signal.

Therefore, the method for starting up an optical pick-up unit according to the present invention ramps the focus actuator 6 up and down its whole range of translation before closing the feedback loops. By this way, the turning points with relatively low or no velocity with respect to the storage layer 5 are moved through the valid range of the focus error signal. As the movement of the turning points through the valid range of the error signal occurs slowly enough, the probability for a successful focus capture is enhanced.

After focus capture, i.e. after closing the focus feedback loop, the track capture is performed. In order to shift the turning points of the radial actuator 15 into a valid range of the radial error signal 14, the radial actuator 15 is actuated providing a translation of the radial actuator 15 leading to a motion of the focal point 12 in a direction parallel to the storage layer 5.

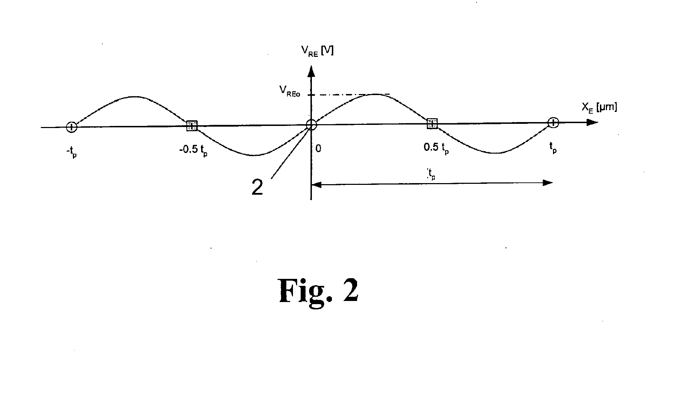

In figure 2, the radial error signal V_{RE} given in volts is schematically sketched for deviations of the radial position from the center of a track 2 in order to demonstrate what is meant by the radial error signal and its operational range. The horizontal axis denotes the distance from the optimum track position at zero in two radial directions. The amplitude of the signal itself is given by the vertical axis. As long as the radial error signal is in the almost linear range around the zero position, i.e. around the optimum position of the focal point in the radial direction, track capturing can easily be performed. As soon as the radial error signal is outside the linear regime it becomes ambiguous and cannot lead to a successful track capturing during the start-up operation of the optical pick-up unit.

As the reading spot moves away from the track center, the radial error signal either increases or decreases depending on the direction in which the reading spot moves. For small distances around the track center, the radial error signal changes about linearly with the distance between the track center and the center of the reading spot. For larger distances between the track center and the center of the reading spot, but still within 1/4th of the track pitch, the relation between the radial error signal and the distance becomes nonlinear, as can be seen in figure 2. The radial error signal changes periodically as the reading spot moves over the tracks. Between tracks and on every track the radial error signal equals zero.

In order to improve the track capture performance, it is suggested to actuate the electromechanical actuator in alternate directions at a frequency which is smaller than a resonance frequency of the electromechanical actuator in use. This actuation of the actuator in alternate directions, i.e. back and forth, before closing of the feedback loop leads to a shifting of the actuator's turning points from outside of the operating range of the optical pick-up unit towards its center of motion. As the actuator is shifted slowly, i.e. in a quasi stationary condition, the possibility that track or focus capturing occurs will be enhanced. In a simple picture the electro-mechanical actuator during the start-up procedure under these conditions describes an oscillatory motion driven by the external vibrations, while the center of the oscillatory motion, i.e. the point of maximum velocity, is moving with constant velocity over the whole range of motion provided by electromechanical actuator. While the point showing the highest velocity of the oscillatory motion is moved across the whole range of motion of actuator, also the turning point of the oscillatory motion is moved across that range. Therefore points of almost zero velocity with respect to the track of the optical storage medium will be moved into the operational range of optical pick-up unit and scanned across this whole operational range.

The actuation in alternate directions at a frequency which is smaller than the resonance frequency of the electromechanical actuator could also mean an actuation leading to a constant shifting of the actuator, moving the actuator to a steady position without ramping it, i.e. an oscillatory ramping of the actuator with zero frequency.

In an embodiment of the invention, the actuator is moved back and forth at frequency which is smaller 100 to 1000 times smaller, preferably 500 to 1000 times smaller than the resonance frequency of the electromechanical actuator. This leads to a slow motion of the turning points of the oscillatory motion of the actuator over the operational range of the optical pick-up unit, increasing the probability for focus or track capture. The smaller the frequency of the actuation of the electromechanical actuator is, the more likely focus or track capture occurs.

In an alternative embodiment of the present invention, the electromechanical actuator is moved between its maximum positions or elongations prior to closing the feedback loop. This could in particular improve the start-up performance under vibration for the focus actuator providing focus capturing.

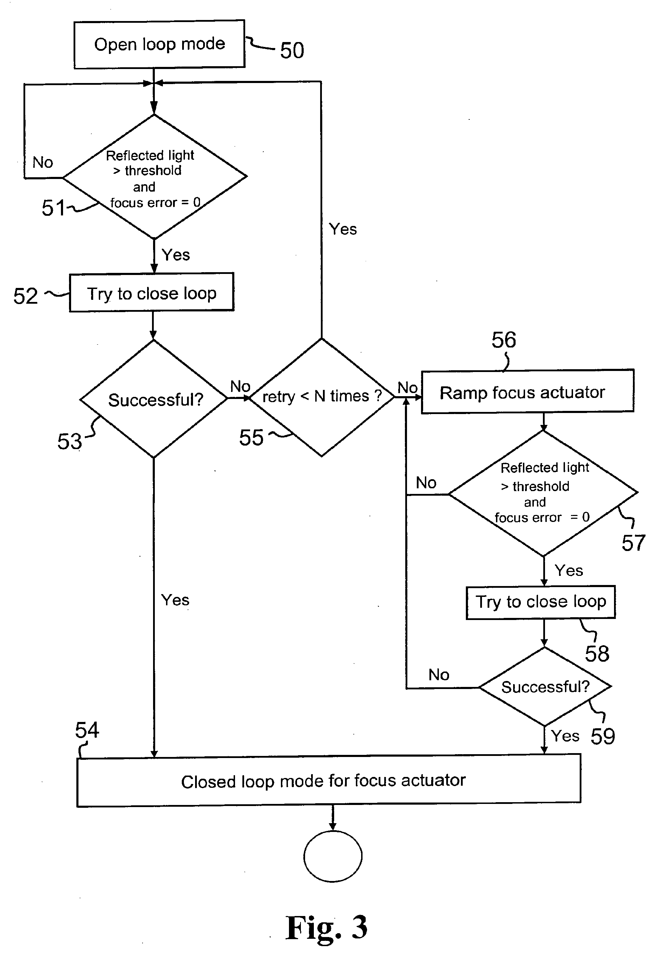

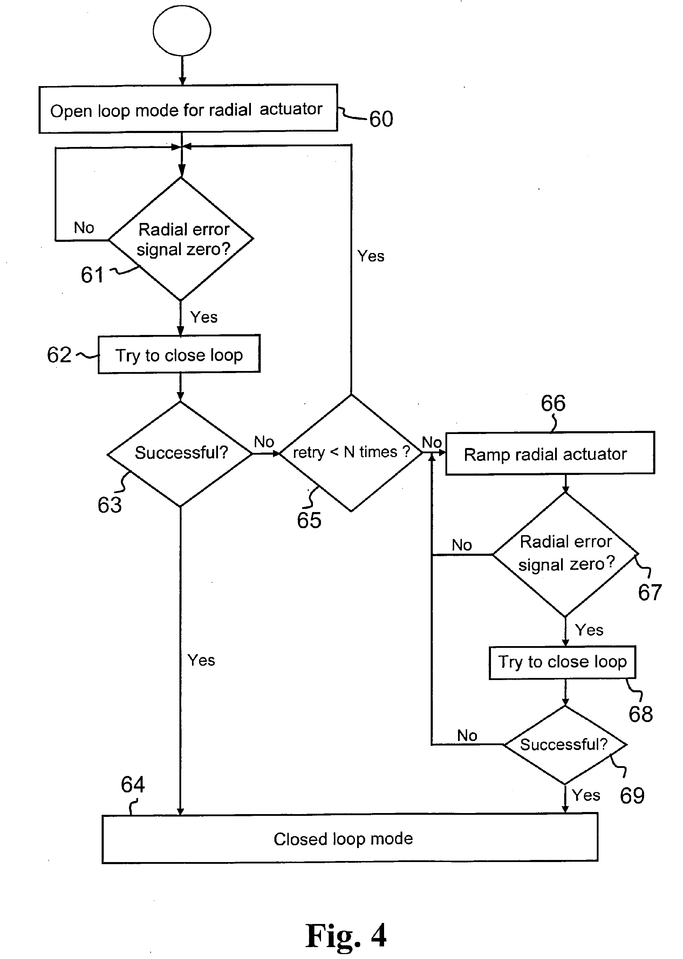

In figures 3 and 4 the method for starting up an optical pick-up unit according to an embodiment of a present invention is depicted as a flow chart. The flow chart of figure 3 shows the initial transition of the focus error controller from an open loop operation into a closed loop operation. After the control loop for the focus controller has been closed, i.e. focus capture has been achieved, the method proceeds attempting to close the control loop for the radial actuator as depicted in figure 4.

As shown in figure 3, the focus controller is initially in open loop mode (step 50) continuously analyzing the focus error signal. Once at decision point (step 51), a zero focus error signal is detected and the reflected amount of light exceeds a certain threshold, the system attempts to close the feedback loop at step 52. At decision point (step 53), it is then checked whether the attempted closure of the feedback loop at step 52 was successful or not. If this attempt was not successful, the method detects that the system is still in the open loop mode and then proceeds to step 51 for restarting the process. At the same time, a retry number is calculated at step 55. The retry number is defined as the number of times from step 53 back to step 51. The retry number is preferably less than N times. If the retry number is larger or equal to N, then step 56 is executed.

In case focus capturing has been successful, the focus actuator is further controlled in closed feedback loop mode (step 54) in order not to loose the focal position. The system then attempts to close the radial controller feedback loop as depicted in figure 4.

In case it is detected at decision point (step 55) that the attempt to close the feedback loop has failed for N times, in this particular example for the third time, a much slower ramping of the focus actuator (step 56) according to the present invention starts. By ramping the focus actuator at a slow velocity, the turning points with zero velocity are shifted into the operational range of the control loop. Herein, a slow velocity is considered a velocity being slow with respect to the average velocity of the actuator occurring due to the superposition of the external vibrations and the fast ramping performed for focus capturing. The slow ramping must be slow enough such that the time constant of the PID controller 8 is sufficient to perform a focus capture at the turning points of the focus actuator.

Once a minimum focus error signal is detected at decision point (step 57), it is attempted to close the focus feedback loop at step 58. If, at the following decision point (step 59), it is detected that the attempt to close the feedback loop has failed, the slow ramping procedure (step 56) according to the present invention is repeated. If, however, focus capturing has been successfully carried out, i.e. the focus feedback loop has been closed, closed focus feedback loop operation (step 54) starts and the system proceeds with the steps depicted in figure 4 to close the radial feedback loop.

For the radial controller, the corresponding method can be summarized as follows.

The radial controller is initially in open loop mode (step 60) continuously analyzing the radial error signal. Once at decision point (step 61), a zero radial error signal is detected, the system attempts to close the feedback loop at step 62. At decision point (step 63), it is then checked whether the attempted closure of the feedback loop at step 62 was successful or not. If this attempt was not successful, the method detects that the system is still in the open loop mode and then proceeds to step 61 for restarting the process. At the same time, a retry number is calculated at step 65. The retry number is defined as the number of times from step 63 back to step 61. The retry number is preferably less than N times. If the retry number is larger or equal to N, then step 66 is executed.

In case radial capturing has been successful, the radial actuator is further controlled in closed feedback loop mode (step 64) in order not to loose the radial position.

In case it is detected at decision point (step 65) that the attempt to close the feedback loop has failed for N times, in this particular example for the third time, a slow ramping of the radial actuator (step 66) according to the present invention starts. By ramping the radial actuator at a slow velocity the turning points with zero velocity are shifted into the operational range of the optical pick-up unit. Herein a slow velocity is considered a velocity being slow with respect to the average velocity of the actuator occurring due to the external vibrations. The slow ramping must be slow enough such that the time constant of the PID controller 13 is sufficient to perform a radial capture at the turning points of the radial actuator. Alternatively to the slow ramping of the radial controller, the radial controller could also be provided with a steady translational offset for moving the center of the oscillatory motion steadily into the operational range of the optical pick-up unit.

Once a zero radial error signal is detected at decision point (step 67), it is attempted to close the radial feedback loop at step 68. If at the following decision point (step 69) it is detected that the attempt to close the feedback loop has failed, the slow ramping procedure (step 66) according to the present invention is repeated. If, however, radial capturing has been successfully carried out, i.e. the radial feedback loop has been closed, closed radial feedback loop operation (step 64) starts and the system operates in closed feedback loop mode with the focus and radial feedback loops being closed.

In an embodiment of the present invention, the actuation of the electromechanical actuator prior to closing the feedback loop should only be performed when a prior attempt to close the feedback loop has failed. The scanning of the turning point of the oscillatory motion of the actuator across the working range of optical pick-up unit requires some time, slowing down the start-up procedure. Thus if possible track capturing and therefore closing of the feedback loop at first instance shall be performed by an unrestricted and uncontrolled swinging of actuator. In this embodiment, activation of the electromechanical actuator prior to closing the feedback loop only occurs after the track capturing has failed for a predetermined number of times, i.e. once, twice, three times or any other number. This way track capturing can be accomplished on a fast time scale if possible while a fall back solution is provided in case track capturing with the uncontrolled and swinging actuator is impossible.

According to a further aspect of the present invention, a computer program enabling a processor to carry out the method as laid out before is provided.

A method according to the different embodiments of the present invention could advantageously be employed in a playback or recording module for an optical data medium, preferably for a CD or DVD or any other disc-shaped optical storage medium.

A playback module according to embodiments of the present invention could be employed in an audio, video or data system, advantageously in a portable audio, video or data system.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure and the appended claims.

In the claims,the word "comprising" does not exclude other elements or steps, and the indefinite article "a" or "an" does not exclude a plurality. The mere fact that certain measures are recited in mutually different dependent claims does not indicate that the combination of these measures can not be used to advantage. Any reference signs in the claims should not be construed as limiting the scope.

## Claims

1. Method for starting-up an optical pick-up unit for an optical storage medium having a storage layer for storing data, comprising the steps:
using a focusing element mounted on at least one actuator to position a focal point of a readout beam on the storage layer to read the data on the storage layer, wherein the data is arranged on a track having a lateral extension around a center;
determining an error signal representing a distance between the focal point and the storage layer or between the focal point and the center of the track;
actuating the actuator prior to closing a feedback loop, wherein the actuator is moved in alternate directions at a frequency which is smaller than a resonance frequency of the electromechanical actuator; and
closing the feedback loop to actuate the actuator in a controlled manner, wherein after closing the feedback loop, the error signal is used to determine the actuation of the actuator, such that the focal point follows the data stored on the track.

2. The method according to claim 1, wherein the actuator is moved at a frequency which is 100 to 1000 times smaller than the resonance frequency of the actuator.

3. The method according to claim 1, wherein prior to closing the feedback loop, the actuator is actuated by providing a constant translational offset.

4. The method according to claim 1, wherein prior to closing the feedback loop, the actuator is ramped between its maximum positions.

5. The method according to claim 1, wherein the actuating of the actuator prior to closing the feedback loop is only performed when a prior attempt to close the feedback loop is failed.

6. The method according to claim 1, wherein the actuator is used as a focus actuator for controlling the position of the focal point with respect to a first direction perpendicular to the plane of the storage layer of the optical data medium.

7. The method according to claim 1, wherein the actuator is used as a radial actuator for controlling the position of the focal point with respect to a second direction parallel to the plane of the storage layer of the optical data medium.

8. A computer program enabling a processor to carry out a method according to claim 1.

9. A computer readable medium comprising a computer program according to claim 8.

10. A playback or recording module using a method for starting-up an optical pick-up unit for an optical storage medium according to claim 1.

11. An audio, video or data system comprising a playback or recording module according to claim 10.
